# EUROPÄISCHE PATENTANMELDUNG

(11) **EP 3 620 673 A1**
(43) Veröffentlichungstag der Anmeldung: **11.03.2020**
(21) Anmeldenummer: 19194818.1
(22) Anmeldetag: 02.09.2019
(51) Int. Cl.: F16B 25/00, F16B 33/00

(54) **BETONSCHRAUBE**

(30) Priorität: 10.09.2018 DE 102018121951; 30.08.2019 DE 102019123258
(71) Anmelder: fischerwerke GmbH & Co. KG, 72178 Waldachtal (DE)
(72) Erfinder: Wälder, Jonas, 71069 Sindelfingen (DE); Schilling, Sebastian, 72285 Pfalzgrafenweiler-Durrweiler (DE)
(74) Vertreter: Suchy, Ulrich Johannes

(57) **Zusammenfassung**

Die Erfindung betrifft eine Betonschraube (1) mit einem sich entlang einer Längsachse (L) erstreckenden Schaft (2) und mit einem Außengewinde (11), das den Schaft (2) wendelförmig umläuft und das mit dem Schaft (2) fest verbunden ist. Erfindungsgemäß weist das Außengewinde (11) einen Schneidabschnitt (10) mit einem Schneidelement (13) zum Einschneiden in Beton auf, das durch Kaltumformung verfestigt ist.

## Beschreibung

Die Erfindung betrifft eine Betonschraube mit den Merkmalen des Oberbegriffs des Anspruchs 1.

Eine Betonschraube ist eine Schraube, die einen Schaft aufweist, an dem ein Außengewinde angeordnet ist, mit dem ein Innengewinde in einen mineralischen Ankergrund wie Beton eingeschnitten werden kann. Das Außengewinde weist hierzu zumindest abschnittsweise eine Härte und Festigkeit auf, die ein Einschneiden in Beton ermöglicht. Mit einer Betonschraube kann ein Anbauteil, beispielsweise eine Stahlkonsole, am Ankergrund befestigt werden. Um ein Einschneiden des Innengewindes in Beton oder einen anderen mineralischen Ankergrund zu ermöglichen, bestehen Betonschrauben üblicherweise aus einem gehärteten Kohlenstoffstahl. Wird die Betonschraube allerdings im Bauwesen im Außenbereich eingesetzt, besteht die Gefahr, dass eine aus Kohlenstoffstahl gefertigte Betonschraube korrodiert. Zur Verwendung im Außenbereich sind daher Betonschrauben bekannt, bei denen der Schaft und ein Teil des Außengewindes aus einem korrosionsbeständigen Werkstoff besteht.

Eine derartige Betonschraube ist aus der Europäischen Patentschrift EP 2 185 829 B1 bekannt. In dieser Patentschrift ist eine Betonschraube mit einem Schaft aus einem korrosionsbeständigen Werkstoff beschrieben. Das Außengewinde besteht aus einer Wendel mit mehreren Windungen, die mit dem Schaft formschlüssig verbunden ist. Die vorderen zwei bis drei Windungen der Wendel dienen als Schneidabschnitt zum Einschneiden des Innengewindes in die Bohrlochwand. Der Schneidabschnitt besteht aus einem nicht-korrosionsbeständigen, gehärteten Kohlenstoffstahl mit einer zum Einschneiden in die Bohrlochwand ausreichenden Härte und Festigkeit. Ein hinterer Teil der Wendel ist dagegen aus einem korrosionsbeständigen Federstahl hergestellt, der als Tragabschnitt wirkt. Weitere derartige Betonschrauben sind beispielsweise aus der Europäischen Patentschrift EP 2 501 944 B1 und der internationalen Anmeldung WO 2017/060214 A1 bekannt.

Eine Alternative zur Ausbildung des Außengewindes einer Betonschraube mit einer Wendel, die mehrere Windungen aus gehärtetem Kohlenstoffstahl aufweist, ist das Einfügen von Schneidelementen ausreichender Härte und Festigkeit in ein am Ankerschaft durch Walzen ausgebildetes Gewinde. Aus der Europäischen Patentschrift EP 2 204 244 B1 ist eine derartige Betonschraube bekannt. Der Schaft und das Außengewinde dieser Betonschraube bestehen aus einem korrosionsbeständigen Metall. Das Außengewinde ist mit dem Schaft aus einem Rohling bzw. einem Drahtabschnitt durch Umformen und Gewindewalzen gefertigt. In einem vorderen Schneidabschnitt sind in das relativ weiche Außengewinde Schneidkörper aus einem Hartstoff hoher Festigkeit eingesetzt und verschweißt, die das Gewinde harmonisch fortsetzen und ein Einschneiden des Außengewindes in Beton ermöglichen.

Aufgabe der Erfindung ist es eine alternative Betonschraube vorzuschlagen, die einfach herstellbar ist.

Diese Aufgabe wird erfindungsgemäß durch eine Betonschraube mit den Merkmalen des Anspruchs 1 gelöst. Die erfindungsgemäße Betonschraube weist einen Schaft auf, der sich entlang einer Längsachse erstreckt. Typischerweise ist der Schaft als Rotationskörper um die Längsachse ausgebildet, insbesondere als Zylinder, der insbesondere lang gestreckt ist. Der Schaft weist an seinem hinteren Ende üblicherweise einen Schraubenkopf mit einer Werkzeugaufnahme für ein Drehwerkzeug auf. Die Werkzeugaufnahme kann beispielsweise als Außen- oder Innenmehrkant ausgebildet sein. Das vordere Ende der Schraube, das beim planmäßigen Einbringen in Einbringrichtung in ein Bohrloch zuerst in das Bohrloch eingeführt wird, wird üblicherweise als Schraubenspitze bezeichnet, auch wenn das vordere Ende nicht spitz oder kegelartig zulaufen muss, sondern beispielsweise auch als ebene Fläche ausgebildet sein kann.

Der Schaft der erfindungsgemäßen Betonschraube besteht üblicherweise aus einem Stahl. Für den Einsatz im Außenbereich im Bauwesen ist der Schaft vorzugsweise aus einem korrosionsbeständigen Stahl hergestellt. Ein "korrosionsbeständiger Stahl" im Sinne dieser Erfindung ist ein Stahl, der mindestens 10,5 Masseprozent Chrom (Cr) und weniger als 1,2 Masseprozent Kohlenstoff (C) enthält und dadurch gegenüber nichtlegierten Stählen eine deutlich verbesserte Korrosionsbeständigkeit aufweist. Im Allgemeinen Sprachgebrauch wird ein derartiger Stahl als Edelstahl bezeichnet. Insbesondere wird im Rahmen dieser Erfindung unter einem "korrosionsbeständiger Stahl" ein Stahl verstanden, der ohne zusätzliche Korrosionsschutzmaßnahmen als Befestigungsmittel im Baubereich im Außenbereich eingesetzt werden kann und einen entsprechend erforderlichen Korrosionswiderstand aufweist. Dies grenzt einen "korrosionsbeständiger Stahl" gegenüber den sonst im Bauwesen üblichen un- oder niedriglegierten Kohlenstoffstählen ab, die mit einer galvanischen Verzinkung versehen üblicherweise nur für den Einsatz in trockenen Innenräumen bauaufsichtlich zugelassen sind. Insbesondere besteht der Schaft der erfindungsgemäßen Betonschraube aus einem korrosionsbeständigen Stahl mit der Werkstoffnummer 1.4401 nach DIN EN 10088-1:2014-12 oder einem Stahl, dessen Korrosionswiderstand dem des Stahls 1.4401 ähnlich, vergleichbar oder besser ist. Ein derartiger Stahl ist beispielsweise einer der Stähle mit den Werkstoffnummern 1.4307, 1.4362 oder 1.4529 nach DIN EN 10088-1:2014-12.

Die erfindungsgemäße Betonschraube weist ein Außengewinde auf, das den Schaft wendelförmig umläuft. Das Außengewinde besteht aus mehreren Windungen, wobei eine Windung den Schaft genau einmal mit einer Steigung umläuft. Das Außengewinde kann sich über die ganze Länge von der Schraubenspitze bis zum Schraubenkopf erstrecken. Es kann aber auch ein gewindefreier Abschnitt am Schaft vorgesehen sein, insbesondere zwischen einem vorderen Abschnitt des Schafts, an dem das Außengewinde angeordnet ist, und dem Schraubenkopf, der das hintere Ende der Betonschraube bildet. In radialer Richtung zur Längsachse erstreckt sich das Außengewinde vom Schaft nach außen weg. Die das Außengewinde bildende Wendel ist mit dem Schaft verbunden. Sie ist als Gesamtes oder zumindest in Teilen unabhängig vom Schaft hergestellt und durch Schweißen, Löten, Kleben und/oder durch Formschluss mit dem Schaft verbunden, wobei diese Aufzählung nicht abschließend ist. Am Schaft kann eine Nut vorgesehen sein kann, in die eine Wendel eingreift. Teile der Wendel können aber auch gemeinsam mit dem Schaft durch Umformen und Gewindewalzen hergestellt und am Schaft einstückig angeformt sein. Zum Einschneiden in eine Bohrlochwand aus Beton weist das Außengewinde einen Schneidabschnitt mit mindestens einem Schneidelement aus Stahl auf. Ein Schneidelement im Sinne der Erfindung ist ein Element, das eine Härte und Festigkeit aufweist, die es ermöglicht, ein Innengewinde in eine Bohrlochwand aus verdichtetem Normalbeton ohne Fasern der Festigkeitsklasse C20/25 nach DIN EN 206:2014-07 oder höher einzuschneiden. Zumindest das Schneidelement des Außengewindes ist kontaktfrei und unabhängig vom Schaft hergestellt. Das Schneidelement ist aber ebenfalls fest mit dem Schaft verbunden, wobei dies auch eine indirekte Verbindung, beispielsweise über weitere, an das Schneidelement angrenzende Teile des Außengewindes, einschließt. Unter "kontaktfrei und unabhängig" soll verstanden werden, dass der Schaft und das Schneidelement räumlich getrennt voneinander hergestellt sind. Insbesondere werden der Schaft und das Schneidelement auf zwei unterschiedlichen Maschinen gefertigt und anschließend zusammengeführt, also verbunden. Ein Vorteil liegt darin begründet, dass bei einer Serienfertigung der erfindungsgemäßen Betonschraube die Schäfte und die Schneidelemente mit unterschiedlichen Taktzeiten hergestellt werden können. Unter "kontaktfrei und unabhängig" ist weiter zu verstehen, dass das Schneidelement nicht durch ein additives Fertigungsverfahren auf dem Schaft hergestellt ist. Insbesondere ist das Schneidelement somit nicht durch ein temporär geschmolzenes Metall hergestellt, welches auf den Schaft aufgebracht wird.

Erfindungsgemäß ist das Schneidelement durch Kaltumformung verfestigt, was eine einfache, kostengünstige Serienproduktion der erfindungsgemäßen Betonschraube ermöglicht. Bei einer Kaltumformung des Stahls, also bei einer plastischen Umformung unterhalb der Rekristallisationstemperatur des Stahls, kommt es zu einer Kaltverfestigung, durch die die Zugfestigkeit des Schneidelements erheblich ansteigt. Damit das Schneidelement in eine Bohrlochwand aus Beton einschneiden kann, wird Stahl, aus dem das Schneidelement hergestellt wird, durch eine Kaltumformung so verfestigt, dass er eine Festigkeit von mindestens 1500 N/mm² aufweist, insbesondere von mindestens 1800 N/mm², wobei hier die Festigkeit mit der Zugfestigkeit des Stahls nach DIN EN ISO 6892-1:2017-02 gleichzusetzen ist. Dagegen ist es ausreichend, wenn der Schaft der Betonschraube eine geringere Zugfestigkeit aufweist, insbesondere von mindestens 500 N/mm², insbesondere von mindestens 600 N/mm². Insbesondere wird der Stahl des Schneidelements durch Biegen, Walzen, Rundkneten oder Drahtziehen kaltverfestigt. Beim Drahtziehen wird ein Stück Draht insbesondere in seinem Querschnitt reduziert oder verändert, also verformt und dadurch verfestigt. Dabei kann der Querschnitt des Drahts beispielsweise von einem runden Ausgangsquerschnitt zu einem keilförmigen Querschnitt einer Gewindeflanke umgeformt werden. Vorzugsweise ist das Schneidelement ein durch Kaltumformung, insbesondere durch Drahtziehen verfestigter Draht.

Erfindungsgemäß müssen der Schaft, das Schneidelement des Außengewindes und/oder der nicht-schneidende Teil des Außengewindes nicht zwingend aus demselben Stahl bestehen. Beispielsweise kann der Schaft aus einem ersten korrosionsbeständigen Stahl hergestellt sein, während das Schneidelement aus einem Kohlenstoffstahl oder einem zweiten korrosionsbeständigen Stahl hergestellt ist. Dabei kann der nicht-schneidende Teil des Außengewindes durch Gewindewalzen einstückig am Schaft angeformt sein und wie der Schaft aus dem ersten korrosionsbeständigen Stahl bestehen. Der nicht-schneidende Teil des Außengewindes, der Tragabschnitt, weist dann eine gegenüber dem Schneidabschnitt reduzierte Festigkeit auf. Er kann daher nicht selbstständig in den Beton einschneiden, aber in das durch den Schneidabschnitt vorgeschnittenen Innengewinde eingreifen und zur Tragfähigkeit der Betonschraube wesentlich beitragen.

Für eine besonders kostengünstige Serienproduktion besteht das Schneidelement vorzugsweise aus einem handelsüblichen Kohlenstoffstahl, wobei der Begriff "Kohlenstoffstahl" hier nicht- oder nur niedriglegierte Stähle meint. Diese Stähle sind im Regelfall kostengünstig im Einkauf und gut zu bearbeiten. Beispielsweise besteht das Schneidelement aus einem Kohlenstoffstahl C20 gemäß DIN EN 10263-2:2018-02.

Bei einer bevorzugten Ausgestaltungsform der erfindungsgemäßen Betonschraube besteht das Schneidelement aus einem korrosionsbeständigen Stahl. Insbesondere bestehen bei dieser bevorzugten Betonschraube auch der Schaft und auch der Teil des Außengewindes, der nicht vom Schneidelement gebildet wird, aus korrosionsbeständigem Stahl. Insbesondere wird das gesamte Außengewinde aus dem Schneidelement gebildet. Beispielsweise wird das durch Kaltumformung verfestigte Schneidelement aus einem Stahl der Werkstoffnummern 1.4401, 1.4037, 1.4006 oder 1.4362 nach DIN EN 10088-1:2014-12 hergestellt. Der Schaft kann ebenfalls aus einem dieser Werkstoffe hergestellt werden. Insbesondere besteht der Schaft aus dem gleichen Stahl, wie das durch Kaltumformung verfestigte Schneidelement und der nicht-schneidende Teil des Außengewindes ist an den Schaft durch Gewindewalzen angeformt. Durch diese bevorzugte Ausbildung der Betonschraube wird die Tragfähigkeit der Betonschraube wesentlich verbessert, da nun auch der gesamte Schneidabschnitt und nicht nur der Tragabschnitt des Außengewindes als über die Nutzungsdauer der Betonschraube dauerhaft tragfähig angesehen werden kann, da das Tragverhalten des aus korrosionsbeständigem Stahl hergestellten Schneidabschnitts durch für den Außenbereich im Bauwesen typische korrosive Einflüsse, wie beispielsweise Feuchtigkeit, über die Nutzungsdauer nicht negativ beeinflusst wird.

Vorzugsweise erstreckt sich das Schneidelement über mindestens eine Windung des Außengewindes, insbesondere über mindestens zwei Windungen. Das Schneidelement ist insbesondere als ein zusammenhängendes Stück der Wendel mit mindestens einer Windung, insbesondere mit mindestens zwei oder mehreren Windungen ausgestaltet. Insbesondere kann die gesamte Wendel, die das Außengewinde bildet, aus verfestigten, Stahl hergestellt sein, insbesondere aus einem korrosionsbeständigen Stahl. Die Wendel kann gesondert vom Schaft hergestellt und nach dem Herstellen des Schafts auf den Schaft aufgebracht und beispielsweise durch Schweißen mit diesem fest verbunden werden. Alternativ ist es möglich, dass nur die vorderen Windungen des Außengewindes durch das gewundene Schneidelement aus korrosionsbeständigem, verfestigtem Stahl hergestellt und beispielsweise durch Schweißen mit dem Schaft fest verbunden werden, während ein sich an das Schneidelement anschließender hinterer Teil des Außengewindes als Tragabschnitt durch Gewindewalzen am Schaft angeformt ist. Alternativ kann der Schneidabschnitt mehrere Schneidelemente umfassen, die, wie dies aus der Europäischen Patentschrift EP 2 204 244 B1 prinzipiell bekannt ist, voneinander beabstandet, in die am Schaft durch Gewindewalzen angeformte Gewindeflanken als Teile des Außengewindes eingesetzt sind.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei in der Zeichnung dargestellten Ausführungsbeispielen näher erläutert.

Es zeigen:
- Figur 1: eine erste erfindungsgemäße Betonschraube in einer perspektivischen Ansicht;
- Figur 2: einen Schnitt durch das Außengewinde und einen Teil des Schafts der ersten erfindungsgemäßen Betonschraube in vergrößerter Darstellung des Bereichs II der Figur 1; und
- Figur 3: eine zweite erfindungsgemäße Betonschraube in einer perspektivischen Ansicht.

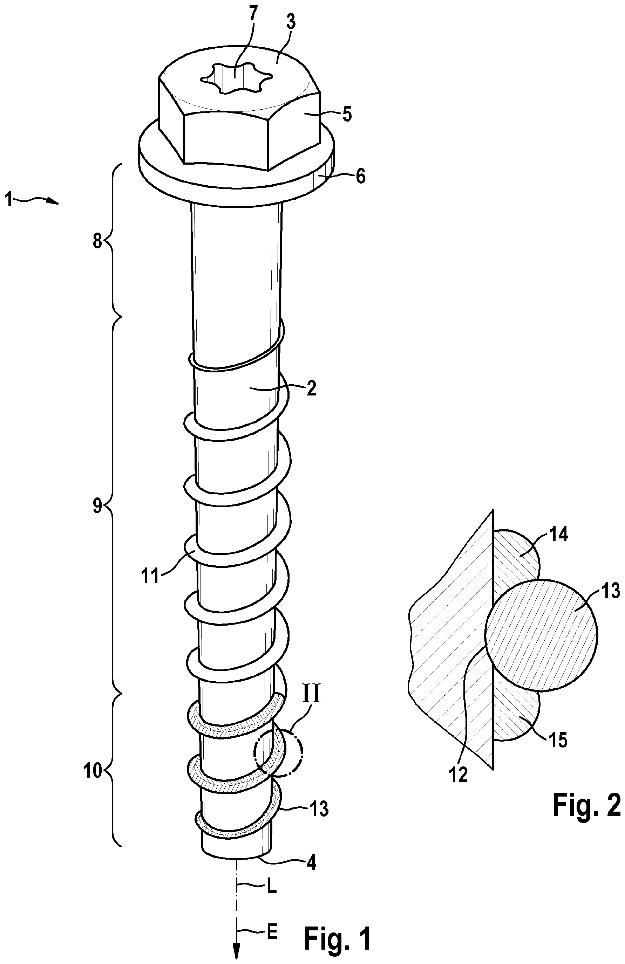

Die Figur 1 zeigt eine erste erfindungsgemäße Betonschraube 1 mit einem Schaft 2, der sich entlang einer Längsachse L von einem Schraubenkopf 3, der das hintere Ende der Betonschraube 1 bildet, bis zu einer Schraubenspitze 4 erstreckt. Die Schraubenspitze 4 bildet das in Einbringrichtung E vordere Ende der Betonschraube 1. Die Einbringrichtung E ist die Richtung, in die die Betonschraube 1 in ein Bohrloch in einem Ankergrund aus Beton (nicht dargestellt) planmäßig eingebracht wird. Der Schraubenkopf 3 ist als Außensechskant 5 mit einer angeprägten Unterlegscheibe 6 ausgebildet. Als zusätzliche Werkzeugaufnahme zum Außensechskant 5 ist in den Schraubenkopf 3 eine sternförmige Innenkontur 7 eingeprägt. In Einbringrichtung E schließt sich an dem Schraubenkopf 3 ein gewindefreier Abschnitt 8 des Schafts 2 an, gefolgt von einem Tragabschnitt 9 und einem Schneidabschnitt 10, der bis zur Schraubenspitze 4 reicht. Im Tragabschnitt 9 und dem Schneidabschnitt 10 ist ein kontinuierlich durchgehendes Außengewinde 11 angeordnet, das den Schaft 2 wendelförmig, mit mehreren Windungen umläuft, und das mit dem Schaft 2 fest verbunden ist. Der Tragabschnitt 9 des Außengewindes 11 wurde gemeinsam mit dem Schaft 2 und dem Schraubenkopf 3 aus einem Rohling bzw. einem Drahtabschnitt durch Umformen hergestellt und durch Gewindewalzen an den Schaft 2 einstückig angeformt. Dagegen wurde im Bereich des Schneidabschnitts 10 eine wendelförmige Nut 12 erzeugt, wie sie in Figur 2 zu sehen ist, deren Steigung der Steigung des Außengewindes 11 entspricht und die kontinuierlich an das Außengewinde 11 des Tragabschnitts 9 anschließt. In die Nut 12 wurde ein wendelförmiges Schneidelement 13 eingesetzt, das die vorderen 2,5 Windungen des Außengewindes 11 im Schneidabschnitt 10 bildet. Das Schneidelement 13 wurde getrennt vom Schaft 2 hergestellt. Wie in Figur 2 zu sehen, ist das Schneidelement 13 durch zwei Schweißnähte 14, 15, die entlang des Schneidelements 13 verlaufen, mit dem Schaft 2 fest verbunden.

Der Schaft 2 der Betonschraube 1, das Außengewinde 11 im Tragabschnitt 9, und das das Außengewinde 11 des Schneidabschnitts 10 bildende Schneidelement 13 bestehen aus korrosionsbeständigem Stahl der Werkstoffnummer 1.4401 nach DIN EN 10088-1:2014-12. Während der Stahl des Schafts 2 eine Zugfestigkeit von 600 N/mm² aufweist, wurde das Schneidelement 13 durch Kaltumformung verfestigt, sodass es eine Zugfestigkeit von 1800 N/mm² aufweist, und somit hart genug ist, um beim Einschrauben der Betonschraube 1 in ein Bohrloch in einem Ankergrund aus verdichtetem Normalbeton ohne Fasern der Festigkeitsklasse C20/25 nach DIN EN 206:2014-07 ein Innengewinde in die Bohrlochwand einzuschneiden. Das Verfestigen des Schneidelements 13 durch Kaltumformung erfolgte durch Drahtziehen, wodurch ein Stück Draht in seinem Durchmesser reduziert, plastisch verformt und aus dem Draht das wendelförmige Schneidelement 13 hergestellt wurde. Dagegen weist das Außengewinde 11 im Tragabschnitt 9 eine gegenüber dem Schneidabschnitt 10 reduzierte Festigkeit auf.

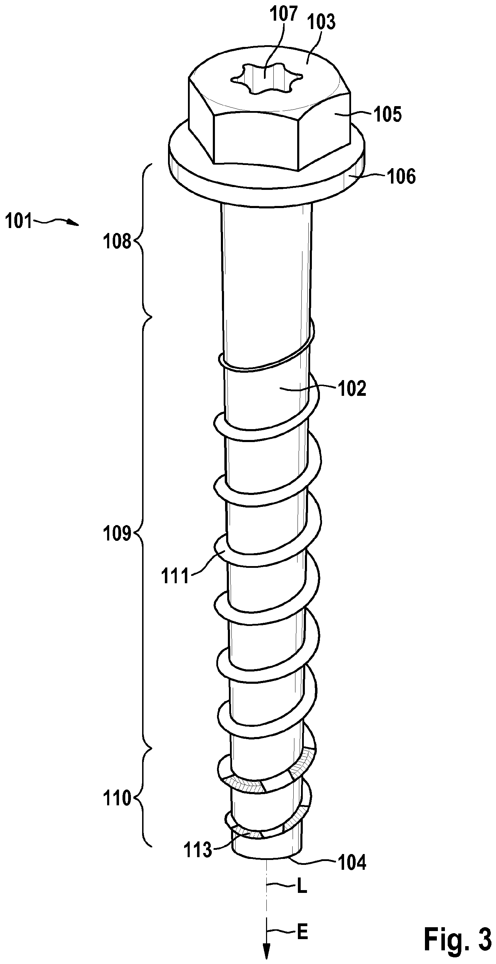

Die in Figur 3 dargestellte zweite erfindungsgemäße Betonschraube 101 unterscheidet sich von der oben beschriebenen Betonschraube 1 der Figur 1 durch die Ausgestaltung des Schneidabschnitts 110, der sich nur über die ersten zwei Windungen des Außengewindes 111 erstreckt. Das Außengewinde 111 wurde beim Gewindewalzen bis vor zur Schraubenspitze 104 an den Schaft 102 angeformt, wobei das Außengewinde 111 im Schneidabschnitt 110 an mehreren Stellen unterbrochen ist. In diese Unterbrechungen sind mehrere kurze Schneidelemente 113 eingebracht, die voneinander beabstandet sind und Teile des Außengewindes 111 bilden, aber eine größere Festigkeit und Härte aufweisen, als die übrigen, durch Gewindewalzen an den Schaft 102 angeformten Teile des Außengewindes 111. Die Schneidelemente 113 bestehen in diesem Fall aus einem Kohlenstoffstahl C20 gemäß DIN EN 10263-2:2018-02, der durch Drahtziehen verfestigt ist, und ebenfalls eine Zugfestigkeit von 1800 N/mm² aufweist. Nach dem Verfestigen wurde der Draht in kurze Stücke geschnitten, die als die Schneidelemente 113 in die Unterbrechungen eingesetzt und durch Schweißen mit dem Schaft 102 fest verbunden wurden. Der Schaft 102 und die übrigen Teile des Außengewindes 111 bestehen auch im zweiten Ausführungsbeispiel der Figur 3 aus korrosionsbeständigem Stahl der Werkstoffnummer 1.4401 nach DIN EN 10088-1:2014-12.

### Bezugszeichenliste

**Betonschraube**

| | | |
|---|---|---|
| 1 | 101 | Betonschraube |
| 2 | 102 | Schaft |
| 3 | 103 | Schraubenkopf |
| 4 | 104 | Schraubenspitze |
| 5 | 105 | Außensechskant |
| 6 | 106 | Unterlegscheibe |
| 7 | 107 | Innenkontur |
| 8 | 108 | gewindefreier Abschnitt |
| 9 | 109 | Tragabschnitt |
| 10 | 110 | Schneidabschnitt |
| 11 | 111 | Außengewinde |
| 12 | 112 | Nut |
| 13 | 113 | Schneidelement |
| 14 | 114 | erste Schweißnaht |
| 15 | 115 | zweite Schweißnaht |
| E | | Einbringrichtung |
| L | | Längsachse |

## Patentansprüche

1. Betonschraube (1, 101) mit einem sich entlang einer Längsachse (L) erstreckenden Schaft (2, 102) und mit einem Außengewinde (11, 111), das den Schaft (2, 102) wendelförmig umläuft und das mit dem Schaft (2, 102) fest verbunden ist,
wobei das Außengewinde (11, 111) einen Schneidabschnitt (10, 110) mit mindestens einem Schneidelement (13, 113) aus Stahl zum Einschneiden in Beton aufweist, das kontaktfrei und unabhängig vom Schaft hergestellt, aber fest mit dem Schaft verbunden ist,
**dadurch gekennzeichnet,**
**dass** das Schneidelement (13, 113) durch Kaltumformung verfestigt ist.

2. Betonschraube nach Anspruch 1, **dadurch gekennzeichnet, dass** das Schneidelement (13, 113) ein durch Kaltumformung verfestigter Draht ist.

3. Betonschraube nach einem der vorhergehenden Ansprüche, **dadurch gekennzeichnet, dass** das Schneidelement (113) aus einem Kohlenstoffstahl besteht.

4. Betonschraube nach einem der vorhergehenden Ansprüche, **dadurch gekennzeichnet, dass** das Schneidelement (13) aus einem korrosionsbeständigen Stahl besteht.

5. Betonschraube nach einem der vorhergehenden Ansprüche, **dadurch gekennzeichnet, dass** der Schaft (2, 102) aus einem korrosionsbeständigen Stahl besteht.

6. Betonschraube nach einem der vorhergehenden Ansprüche, **dadurch gekennzeichnet, dass** das Schneidelement (13) sich über mindestens eine Windung des Außengewindes (11) erstreckt.

7. Betonschraube nach einem der vorhergehenden Ansprüche, **dadurch gekennzeichnet, dass** der Schneidabschnitt (110) mehrere Schneidelemente (113) umfasst, die voneinander beabstandet sind.

8. Betonschraube nach einem der vorhergehenden Ansprüche, **dadurch gekennzeichnet, dass** das Außengewinde (11, 111) einen Tragabschnitt (9, 109) aufweist, der eine gegenüber dem Schneidabschnitt (10, 110) reduzierte Festigkeit aufweist.

9. Betonschraube nach Anspruch 8, **dadurch gekennzeichnet, dass** der Tragabschnitt (9, 109) einstückig am Schaft (2, 102) angeformt ist.
